# EUROPEAN PATENT APPLICATION

(11) **EP 1 441 519 A1**
(43) Date of publication of application: **28.07.2004**
(21) Application number: 04010137.0
(22) Date of filing: 24.10.1996
(51) Int. Cl.: H04N 5/932, G11B 27/30

(54) **Drum speed controller for standard definition video cassette recorder**

(30) Priority: 27.10.1995 KR 9537677
(62) Divisional of application: 96307695.5
(71) Applicant: Samsung Electronics Co., Ltd., Suwon-si, Gyeonggi-do (KR)
(72) Inventor: Kim, Byeong-Soo, Kwachan-city, Kyungki-do, Seoul (KR)
(74) Representative: Robinson, Ian Michael

(57) **Abstract**

A drum speed controller apparatus for a SD-VCR controls a drum rotational speed, to obtain an accurate picture. A track pair number detector (60) detects a track pair number from a signal reproduced from a video tape and a reference frame pulse generator (70) generates a reference frame pulse using a stable clock obtained by dividing a system clock. A comparator (80) compares the track pair number corresponding to a level transition point of the reference frame pulse generated in the reference frame pulse generator (70), with the track pair number detected in the track pair number detector (60). A drum speed controller (90) controls the drum rotational speed according to a comparison result of the comparator (80) so that reproduced data corresponding to a 1-frame is contained in the reference frame pulse.

## Description

The present invention relates to a drum speed controller apparatus for a standard definition video cassette recorder (SD-VCR), and more particularly, to an apparatus for a SD-VCR for generating a correct frame pulse to form an accurate picture even in the presence of errors in a playback signal.

Developments in semiconductor technology have enabled digital signal processing to be applied to the fields of wide-band video as well as audio. Also, developments in recording and reproduction media and recording and reproduction technology have enabled home VCRs to adopt digital signal processing.

US 5,189,568 discloses a method and apparatus for generating frame control signals in a multihead videotape recorder using multiple video signal tracks for each video frame.

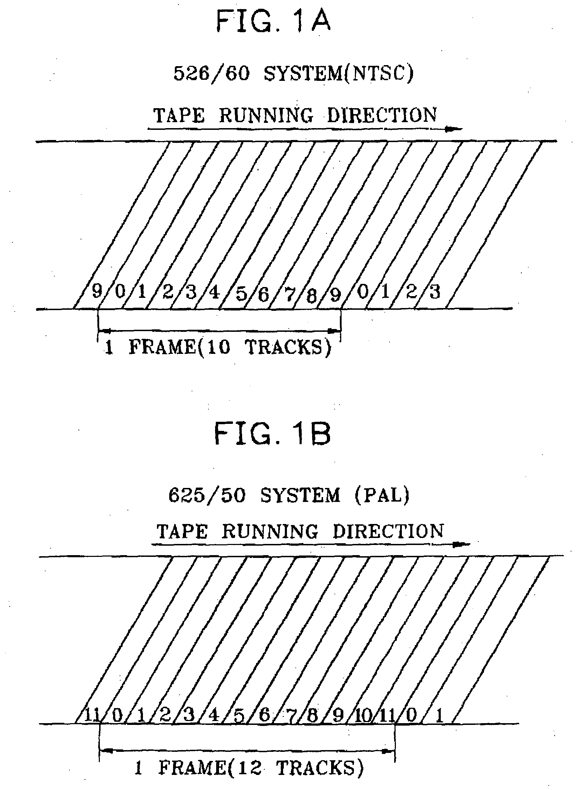

Referring to Figure 1A and 1B showing a relationship between a track and a frame in a SD-VCR system, one-frame data is recorded in ten tracks in a 525/60 system of NTSC and in twelve tracks in a 625/50 system of PAL. That is, assuming that a number is assigned to each track, one-frame data is recorded in the 0th to 9th tracks on a video tape in case of NTSC, and in the 0th to 11th tracks in case of PAL. Thus, when a signal is reproduced from a video tape, the 0th to 9th tracks in case of NTSC and the 0th to 11th tracks in case of PAL should be contained in a one-frame pulse. If a phase of a frame pulse with respect to the one-frame tracks deviates, a normal picture cannot be formed.

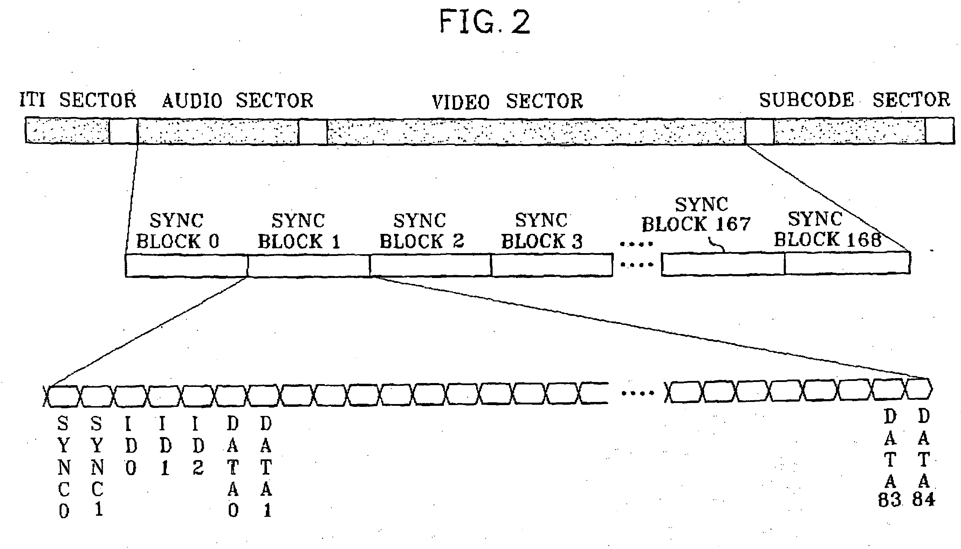

Referring to Figure 2, four sectors such as an insert and track information (ITI) sector, an audio sector, a video sector and a sub-code sector are arranged in each track. Among them, an audio sector and a video sector include a total of 169 sync blocks. Each sync block includes 90 bytes in which sync areas SYNC0 and SYNC1 occupy 2 bytes, identification (ID) codes ID0, ID1 and ID2 occupy 3 bytes, and data fields DATA0-DATA84 occupy 85 bytes. A sync pattern is inserted into a sync area. An ID code includes a 2-byte ID data and a 1-byte ID parity. Information on which track is a current track is shown in an area indicated by ID1, in which a track pair number is recorded as 4 bits with respect to two neighbouring tracks. Also, all sync blocks in a track have the same track pair number, which varies for every other two tracks. Table 1 shows a relationship between a track pair number and a track.

**Table 1**

| Track Pair No. | 525/60 System | 625/50 System |
|---|---|---|
| 0 | Track 0 & 1 | Track 0 & 1 |
| 1 | Track 2 & 3 | Track 2 & 3 |
| 2 | Track 4 & 5 | Track 4 & 5 |
| 3 | Track 6 & 7 | Track 6 & 7 |
| 4 | Track 8 & 9 | Track 8 & 9 |
| 5 | Reserved | Track 10 & 11 |

When reproducing, a head is not controlled with respect to which track should be read first among various tracks. Accordingly, it is necessary to form one-frame data within a one-frame pulse without being out of phase, using readout data.

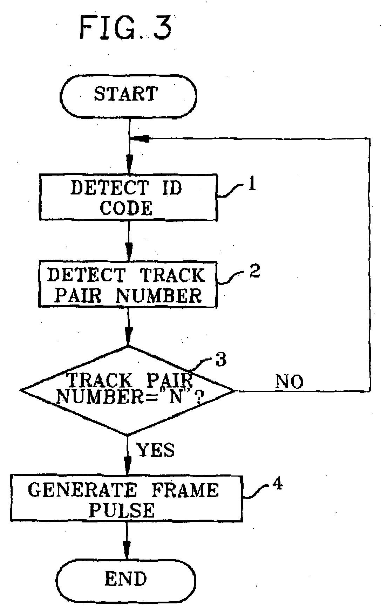

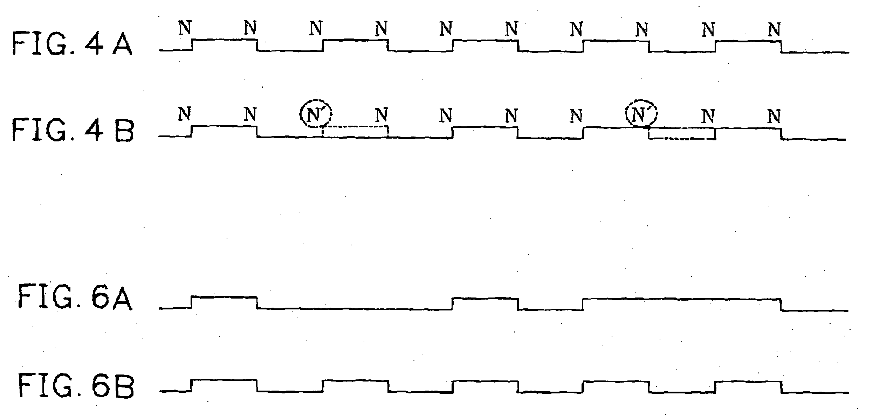

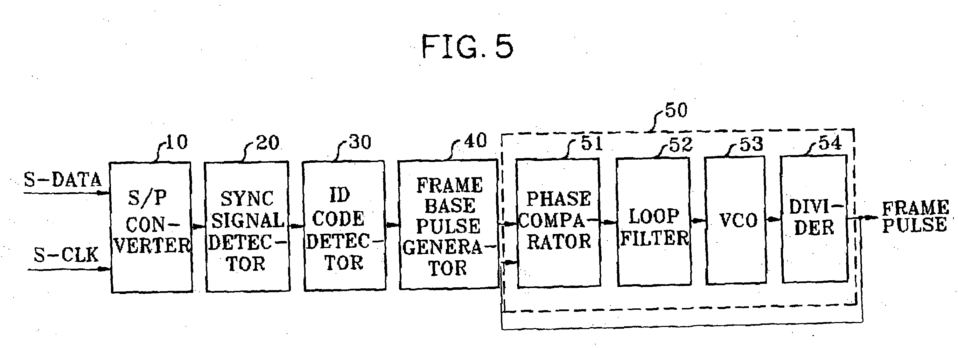

Referring to Figure 3 showing a flowchart for explaining a frame pulse generation operation in a conventional SD-VCR, an ID code is detected among reproduced data in step 1, and a track pair number is detected from the detected ID code in step 2. In step 3, the detected track pair number is compared with a reference number "N" and judges whether the former is consistent with the latter. Here, the reference number "N" is 4 in case of the 525/60 system of NTSC and 5 in case of the 625/50 system of PAL. In step 4, transition of a frame pulse level is performed whenever the detected track pair number is consistent with the reference number "N". Since the track pair number is detected in sequence of "0011223344" in case of NTSC systems, transition of a frame pulse level is performed at the point of time when a track pair number "4" ends or "0" starts. Since the track pair number is detected in sequence of "001122334455" in case of PAL systems, transition of a frame pulse level is performed at the point of time when a track pair number "5" ends or "0" starts. If the detected track pair number is inconsistent with the reference number "N", the program returns to step 1 to repetitively perform the steps 1-4. That is, transition of a frame pulse level is performed every time the track pair number becomes "N" as shown in Figure 4A. As a result, a frame pulse is subject to level-transition for every 10 tracks in case of NTSC and for every 12 tracks in case of PAL.

However, when a detected track pair number differs from an original one due to a detected ID code which contains an error, a level transition does not occur at the point of time (N') where the level transition should occur, as shown in Figure 4B. In this case, accurate signal processing to form a normal picture is not possible.

With a view to solving or reducing the above problem, it is an aim of embodiments of the present invention to provide an apparatus for a SD-VCR for generating a normal frame pulse even though a detected track pair number may differ from an original one due to an error-occurring in the reproducing signal.

According to one aspect of the present invention there is provided drum speed controller for use in a standard definition video cassette recorder (SD-VCR) comprising: means for detecting a signal reproduced from a video tape; a drum speed controller for controlling a drum speed with respect to said reproduced signal; characterised by: the means for detecting a signal from the video tape being arranged to detect a track pair number from the signal reproduced from the video tape; means for generating a reference frame pulse using a stable clock obtained by dividing a system clock; a comparator for comparing a reference number corresponding to a level transition point of the reference frame pulse generated in said reference frame pulse generation means with the track pair number detected in said track pair number detection means; and the drum speed controller being arranged to control the drum speed according to a comparison result of said comparator so that reproduced data corresponding to a one-frame is contained in the reference frame pulse.

Preferably, said drum speed controller judges that the drum speed is normally controlled if the comparison result of said comparator represents that the detected track pair number is consistent with the reference number at the level transition point of the reference frame pulse.

Preferably, said drum speed controller controls the drum speed to be faster if the comparison result of said comparator represents that the detected track pair number is smaller than the reference number at the level transition point of the reference frame pulse.

Preferably, the drum speed controller for a SD-VCR according to claim 1, 2 or 3 wherein said drum speed controller (90) controls the drum speed to be slower if the comparison result of said comparator (80) represents that the detected track pair number is larger than the reference number at the level transition point of the reference frame pulse.

The invention includes video reproduction apparatus including a drum speed controller in accordance with any of the preceding aspects.

For a better understanding of the invention, and to show how embodiments of the same may be carried into effect, reference will now be made, by way of example, to the accompanying diagrammatic drawings, in which:
Figures 1A and 1B are views showing a relationship between a track and a frame in a 525/60 system and a 625/50 system for a SD-VCR, respectively;
Figure 2 shows a recording pattern of each track on a SD-VCR tape;
Figure 3 is a flowchart for explaining a frame pulse generation operation in a conventional SD-VCR;
Figures 4A and 4B are views for explaining frame pulses generated according to the conventional art, in which Figure 4A shows a normal frame pulse and Figure 4B shows a frame pulse when an error occurs in a track pair number;
Figure 5 is a block diagram of a frame pulse generation apparatus for a SD-VCR;
Figures 6A and 6B are views for explaining frame pulses generated according to an embodiment of the present invention, in which Figure 6A shows a frame pulse according to a detected track pair number and Figure 6B shows a frame pulse which has been corrected according to a PLL circuit; and
Figure 7 is a block diagram of a frame pulse generation apparatus for a SD-VCR according to another preferred embodiment of the present invention.

Preferred embodiments of the present invention will be described below in more detail with reference to the accompanying drawings.

Firstly, as background to the present invention, it is useful to discuss a first frame pulse generation apparatus. Referring to Figure 5, a serial-to-parallel (S/P) converter 10 receives reproduced serial data s-data and serial clock s-clk, and converts the serial data s-data into parallel data of predetermined bits according to the serial clock s-clk. A sync signal detector 20 detects a sync signal from the parallel data output from the S/P converter 10. An ID code detector 30 detects an ID code which follows the sync signal detected in the sync signal detector 20.

A frame base pulse generator 40 receives an ID code detected in ID code detector 30 and detects a track pair number contained in the ID code. Then, the detected track pair number is compared with a reference number "N" and judges whether the former is consistent with the latter. The frame base pulse generated 40 generates a frame pulse whose level transition is performed whenever the detected track pair number is consistent with the reference number "N". Here, the level transition of the generated frame pulse is accurately performed at the point of time where a level transition should be performed, in a normal state where an error does not occur as shown in Figure 4A. However, the level transition is not accurately performed in case when an error occurs as shown in Figure 6A. Thus, the Figure 5 apparatus includes a PLL circuit 50 for outputting a frame pulse generated in the frame base pulse generator 40, in which the phase of the frame pulse is synchronised.

A phase comparator 51 in the PLL circuit 50 compares the phase of the frame base pulse generated in the frame base pulse generator 40 with that of the frame pulse fedback from a divider 54, and outputs the result to a loop filter 52. The loop filter 52 applies a control voltage to a voltage controlled oscillator (VCO) 53 according to a result of the phase comparison. The VCO 53 oscillates at a predetermined frequency according to the control voltage. Here, the VCO 53 oscillates at the frequency of K times the frame pulse in which K is a natural. The divider 54 divides the oscillation frequency of the VCO 53 into K times frequency and feeds the divided result back to the phase comparator 51. Also, the divider 54 outputs a frame pulse whose phase and frequency are constant as shown in Figure 6B.

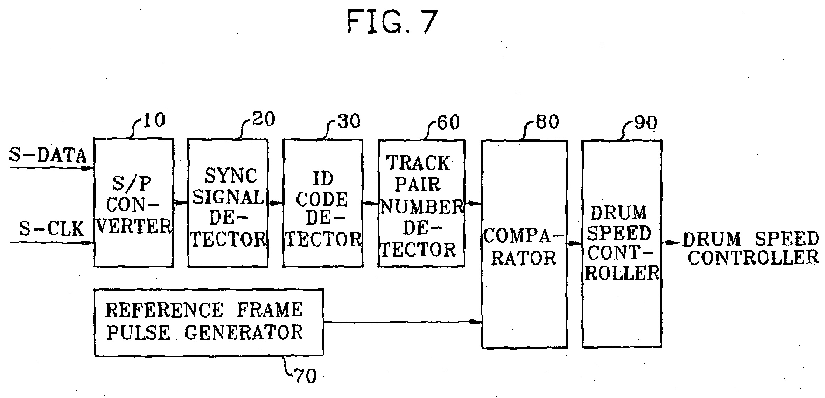

Figure 7 is a block diagram of a frame pulse generation apparatus for a SD-VCR according to a preferred embodiment of the present invention. In Figure 7, since the operation of the S/P converter 10, the sync signal detector 20 and the ID code detector 30 are the same as those of the Figure 5 corresponding blocks, the detailed descriptions thereof will be omitted.

A track pair number detector 60 detects a track pair number contained in an ID code detected in an ID code detector 30. A reference frame pulse generator 70 uses a stable system clock which has no relation with a reproduced signal and generates a reference frame pulse. Here, the reference frame pulse is obtained by dividing a system clock of a higher frequency than that of a frame pulse.

A comparator 80 compares the track pair number corresponding to a level transition point of the reference frame pulse generated in the reference frame pulse generator 70, with the track pair number detected in the track pair number 60, and outputs the result. A drum speed controller 90 judges a current drum control state based on the output of the comparator 80. That is, the drum speed controller 90 judges that the drum is normally controlled if the track pair number generated at the level transition point of the reference frame pulse is the same as a reference number, that is, a desired track pair number, while if both of the track pair numbers are not the same, the drum speed controller 90 controls the drum speed so that the track pair number generated at the level transition point of the reference frame pulse becomes a desired track pair number. Particularly, the drum speed controller 90 controls the drum rotational speed to be faster when the track pair number is smaller than a desired track pair number, so that the track pair number detected at the level transition point of the reference frame pulse becomes a desired track pair number. Meanwhile, if the track pair number is larger than a desired track pair number, the drum speed controller 90 controls the drum rotational speed to be slower so that the track pair number detected at the level transition point of the reference frame pulse becomes a desired track pair number.

The above-described embodiments use the track pair number in the ID code to generate a frame pulse. However, it is possible to generate a frame pulse using a pilot frequency contained in an ITI sector.

As described above, the present invention can generate a correct frame pulse even though an error occurs in a reproduced signal to thereby enable accurate picture retrieval all the time.

While only certain embodiments of the invention have been specifically described herein, it will be apparent that numerous modifications may be made thereto without departing from the scope of the invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A drum speed controller for use in a standard definition video cassette recorder (SD-VCR) comprising:
means (60) for detecting a signal reproduced from a video tape;
a drum speed controller (90) for controlling a drum speed with respect to said reproduced signal;
**characterised by**:
the means (60) for detecting a signal from the video tape being arranged to detect a track pair number from the signal reproduced from the video tape;
means (70) for generating a reference frame pulse using a stable clock obtained by dividing a system clock;
a comparator (80) for comparing a reference number corresponding to a level transition point of the reference frame pulse generated in said reference frame pulse generation means (70) with the track pair number detected in said track pair number detection means (60); and
the drum speed controller (90) being arranged to control the drum speed according to a comparison result of said comparator (80) so that reproduced data corresponding to a one-frame is contained in the reference frame pulse.

2. The drum speed controller for a SD-VCR according to claim 1, wherein said drum speed controller (90) judges that the drum speed is normally controlled if the comparison result of said comparator (80) represents that the detected track pair number is consistent with the reference number at the level transition point of the reference frame pulse.

3. The drum speed controller for a SD-VCR according to claim 1 or 2 wherein said drum speed controller (90) controls the drum speed to be faster if the comparison result of said comparator (80) represents that the detected track pair number is smaller than the reference number at the level transition point of the reference frame pulse.

4. The drum speed controller for a SD-VCR according to claim 1, 2 or 3 wherein said drum speed controller (90) controls the drum speed to be slower if the comparison result of said comparator (80) represents that the detected track pair number is larger than the reference number at the level transition point of the reference frame pulse.

5. A video reproduction apparatus including the drum speed controller in accordance with any of the preceding claims.
